**Europäisches Patentamt**

**European Patent Office**

**Office européen des brevets**

(19)

(11) Veröffentlichungsnummer: **0 148 723**
A2

# (12) EUROPÄISCHE PATENTANMELDUNG

(21) Anmeldenummer: **84730123.1**

(22) Anmeldetag: **20.11.84**

(51) Int. Cl.⁴: **C 04 B 7/44**, C 04 B 7/38

(30) Priorität: **21.12.83 DE 3346901**

(43) Veröffentlichungstag der Anmeldung: **17.07.85**
**Patentblatt 85/29**

(84) Benannte Vertragsstaaten: **AT BE CH DE FR GB IT LI LU NL SE**

(71) Anmelder: **MANNESMANN Aktiengesellschaft, Mannesmannufer 2, D-4000 Düsseldorf 1 (DE)**

(72) Erfinder: **Riemann, Hanns H., Dipl.-Ing., Schattbachstrasse 26, D-4630 Bochum (DE)**
Erfinder: **Sonnenschein, Hans W., Dipl.-Ing., Hatzperbogen 48, D-4300 Essen (DE)**
Erfinder: **Vollmer, Henning, Dr.-Ing., Frauenlobstrasse 110, D-4630 Bochum (DE)**

(74) Vertreter: **Meissner, Peter E., Dipl.-Ing. et al, Herbertstrasse 22, D-1000 Berlin 33 (DE)**

(54) Verfahren zur rückstandsfreien energetischen Nutzung zelluloserreicher Abfälle und Anlage.

(57) Die Erfindung betrifft ein Verfahren zur rückstandsfreien Nutzung zellulosereicher Abfälle als Brennstoff oder Zusatzbrennstoff bei der Zementherstellung, wobei die Abfälle durch Zerkleinern, Sieben und Sichten mit einer magnetischen Entfernung von Eisenanteilen aufbereitet werden und das entstehende Produkt als Brennstoff oder Zusatzbrennstoff benutzt wird.

Um die im zellulosereichen Abfall enthaltene Energie optimal zu nutzen, wobei die im Abfall enthaltenen Schadstoffe in den Zementklinger eingebunden werden und der Abfall rückstandsfrei verwertet werden kann, wird vorgeschlagen, dass die Abfälle beim Aufbereiten in eine Flugfraktion und eine brennbare Restfraktion aufgeteilt werden, dass die Flugfraktion als Brennstoff oder Brennstoffersatz direkt in den Drehrohofen eingegeben wird, während die brennbare Restfraktion dem Rohrmehl zugemischt wird.

Die Erfindung betrifft ferner eine Anlage zur Durchführung des Verfahrens.

Die Erfindung betrifft ein Verfahren zur Aufbereitung von zellulosereichen Abfallstoffen mit dem Ziel der Nutzung des gewonnenen Brennstoffes und der Reststoffe zum Brennen karbonatischer Rohstoffe in einem Drehrohrofen sowie eine für die Durchführung des Verfahrens geeignete Anlage.

Aus der Veröffentlichung "Die Verwendung von Haushaltsabfällen als Brennstoff in der Zementherstellung" (Proceedings Recycling Berlin 1979, Seite 341 ff) ist bekannt, zerkleinerten Müll zusammen mit anderen Primärbrennstoffen dem Hauptbrenner an der Stirnwand eines Zementdrehofens aufzugeben. Nachteilig bei diesem Vorgehen ist, daß infolge des schwankenden Müllheizwertes das Energieangebot am Ofenauslauf erheblichen Änderungen unterworfen ist. Die stark schwankenden Heizwerte der aufgegebenen Abfallmischung erfordern eine ständige Nachregelung der Hauptbrenner. Ferner kommt es mit dem aufgegebenen Abfall zu Schwierigkeiten, da das aufgegebene Material bis zum Ofenaustritt noch nicht vollständig verbrannt bzw. die dabei entstandene Asche und Schlacke noch nicht hinreichend mit dem auslaufenden Klinker vermischt ist und so eine inhomogene Klinkerqualität entsteht.

Günstiger ist das Vorgehen, das in "Emissionen beim Einsatz von Brennstoffen aus Rückständen in der Zementindustrie (Proceedings Recycling International Berlin 1982, Seite 583 ff) beschrieben ist. Die organische Fraktion des Hausmülls wird separiert, getrocknet, zerfäsert und zu Briketts gepreßt. Diese Briketts werden bei der Zementherstellung in der Vorkalzinierung eingesetzt und substituieren auf diese Weise andere Brennstoffe. Dieses Vorgehen vermeidet die oben beschriebenen Nachteile des schwankenden Heizwertes. Erfordert jedoch eine aufwendige Hausmüllaufbereitung, die die Wirtschaftlichkeit des Gesamtsystems beeinträchtigt, und die ordnungsgemäße Beseitigung der im Prozeß der Müllaufbereitung entstehenden im wesentlichen anorganischen Reststoff-Fraktionen, die noch etwa 30 - 35 % des ursprünglichen Gewichtes ausmachen.

Die Erfindung bezweckt, die im zellulosereichen Abfall enthaltene Energie optimal zu nutzen, wobei die im Abfall enthaltenen Schadstoffe in dem Zementklinker eingebunden werden und der Abfall rückstandsfrei verwertet wird, wobei mit geringem verfahrenstechnischen Aufwand ein Brennstoff und eine brennbare Restfraktion gewonnen werden, deren Heizwerte nur in geringen Grenzen schwanken.

Dieses Ziel wird dadurch erreicht, daß die heizwertreiche flugfähige Hausmüllfraktion, die im wesentlichen aus Papier, Pappen und Kunststoffolien besteht, abgesichtet und als Brennstoff der Stirnwand des Klinkerofens aufgegeben wird. Die sogenannte Reststofffraktion wird gemeinsam mit dem Rohmehl der Vorkalzinierung aufgegeben.

- 3 -                              0148723

Die Erfindung geht davon aus:

1. daß die Zusammensetzung der flugfähigen Hausmüllfraktion nur geringen Schwankungen ihrer Zusammensetzung unterworfen ist und damit einen nahezu konstanten Heizwert aufweist. Hierdurch wird ein kontinuierlicher Betrieb mit konstanter Feuerung ohne
   ständige Nachregelung der Hauptbrenner ermöglicht.

2. daß die anorganischen Hauptbestandteile des Mülls,
   die in der Reststoffraktion enthalten sind,

   - SiO2        ca. 15   %
   - CaO         ca.  3   %
   - Fe2O3       ca.  2,5 %
   - Al2O3       ca.  2,5 %

   auch die Hauptbestandteile des Rohmehls sind.

3. daß die Menge der Schmelze außer von der Temperatur
   vom Gehalt und dem Verhältnis Tonerde zu Eisenoxyd
   abhängt. Da die Schmelze im Invarianzpunkt (1.338
   Grad Celsius) Tonerde und Eisenoxyd im Verhältnis
   von 1,35 : 1 enthält, bildet sich bei diesem Verhältnis der größtmögliche Teil an flüssiger Phase.
   Durch gezielte Zugabe von Zuschlagstoffen, zu denen
   auch das aus den Reststoffen magnetisch abgeschiedene Eisen gehört, kann eine vorgegebene Rohmehlzusammensetzung auf diesen Wert korrigiert werden und
   damit der Klinkerbrand verkürzt und/oder die Brenntemperatur erniedrigt werden.

- 4 -

- 4 -

0148723

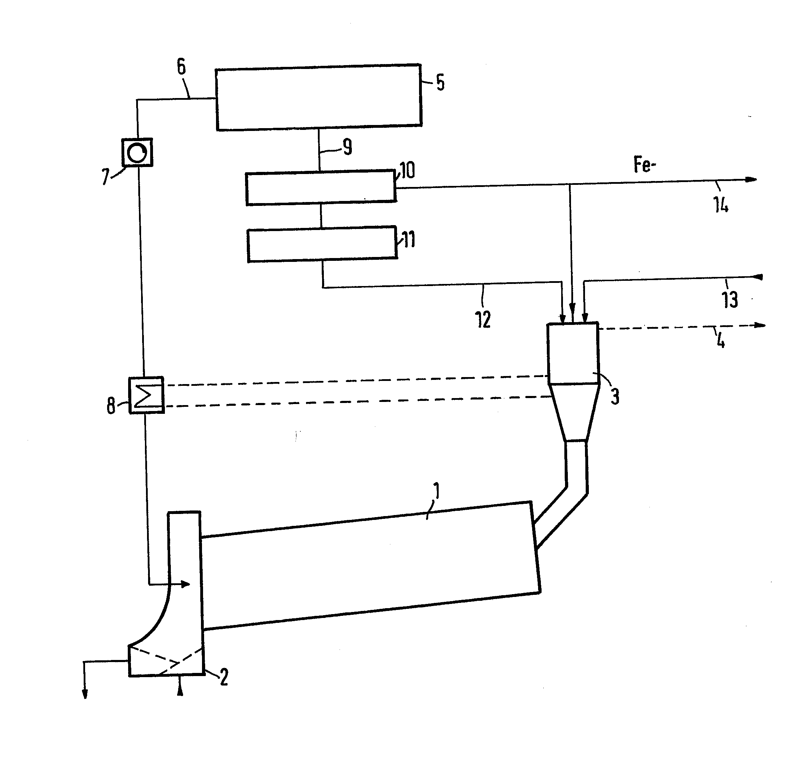

Die Zeichnung zeigt eine vorzugsweise Ausführung des erfindungsgemäßen Verfahrens am Beispiel einer herkömmlichen Anlage zur Gewinnung von Zementklinker. Diese besteht aus dem Drehrohrofen 1 mit einem Rostkühler 2 und einem mehrstufigen Zyklonvorwärmer 3. Die Abluft 4 wird in bekannter Weise z. B. in einem Elektrofilter nachgereinigt. Der zellulosereiche Abfall z. B. Hausmüll wird vorzerkleinert, gesiebt und gesichtet. Dies geschieht vorzugsweise in der in der Patentschrift 28 49 509 beschriebenen Vorrichtung 5. Die abgesichtete Flugfraktion 6 wird zerkleinert 7 und der Stirnwand des Drehrohrofens 1 aufgegeben. Die Aufgabe erfolgt zweckmäßigerweise oberhalb des Hauptbrenners, so daß eine vollständige Verbrennung gewährleistet ist. Der Brennstoff kann bei Erfordernis vor Einsatz in dem Drehrohrofen getrocknet 8 werden. Zum Trocknen kann die Abwärme der Abluft 4 genutzt werden.

Der Siebdurchlauf und der nicht flugfähige Siebüberlauf bilden die sogenannten Reststoffe 9; diese werden entschrottet 10 und zerkleinert 11. Sie werden als Zuschlagstoff 12 zusammen mit dem Rohmehl 13 der Vorkalzinierung aufgegeben.

Zur Verbesserung des Eisenoxyd/Tonerde-Verhältnisses kann ein Teil des separierten Fe-Schrotts 14 der Vorkalzinierung zudosiert werden.

— PATENTANWALTSBÜRO —

**PATENTANWÄLTE**
DIPL.-ING. W. MEISSNER (1980)
DIPL.-ING. P. E. MEISSNER
DIPL.-ING. H.-J. PRESTING

Zugelassene Vertreter vor dem
Europäischen Patentamt –
Professional Representatives before the
European Patent Office

| Ihr Zeichen | Ihr Schreiben vom | Unsere Zeichen | HERBERTSTR. 22, 1000 BERLIN 33 |
|---|---|---|---|
| | | M/Ma | 21.12.83 |

MANNESMANN AG.
Mannesmannufer 2

4000 Düsseldorf 1

---

Verfahren zur rückstandsfreien energetischen Nutzung
zellulosereicher Abfälle und Anlage

---

Patentansprüche

1. Verfahren zur rückstandsfreien Nutzung zellulosereicher Abfälle als Brennstoff oder Zusatzbrennstoff
bei der Zementherstellung, wobei die Abfälle durch Zerkleinern, Sieben und Sichten mit einer magnetischen
Entfernung von Eisenanteilen aufbereitet werden und das
entstehende Produkt als Brennstoff oder Zusatzbrennstoff benutzt wird, dadurch gekennzeichnet, daß die Abfälle beim Aufbereiten in eine Flugfraktion und eine
brennbare Restfraktion aufgeteilt werden, daß die Flugfraktion als Brennstoff oder Brennstoffersatz direkt
in den Drehrohrofen eingegeben wird, während die brennbare Restfraktion dem Rohmehl zugemischt wird.

| TELEX. | TELEGRAMM. | TELEFON· | BANKKONTO | POSTSCHECKKONTO: |
|---|---|---|---|---|
| 1 · 856 44 | INVENTION | TELEFAX | BERLINER BANK AG | P. MEISSNER, BLN-W |
| inven d | BERLIN | 030/891 60 37 | BERLIN 31 | 404 737-103 |
| | | 030/891 30 26 | 3695716000 | |

2. Verfahren nach Anspruch 1, dadurch gekennzeichnet, daß durch Zugabe zumindest eines Teils der magnetisch abgeschiedenen Eisenfraktion zum Rohmehl ein Verhältnis von Tonerde zum Eisenoxyd von 1,35 : 1 eingestellt wird.

3. Verfahren nach Anspruch 1 oder 2, dadurch gekennzeichnet, daß die Flugfraktion vor der Übergabe in den Drehrohrofen zerkleinert wird.

4. Verfahren nach einem der Ansprüche 1 bis 3, dadurch gekennzeichnet, daß die Flugfraktion vor Übergabe in den Drehrohrofen getrocknet wird.

5. Verfahren nach Anspruch 4, dadurch gekennzeichnet, daß zum Trocknen die Abluft des Drehrohrofens benutzt wird.

6. Anlage zur Durchführung des Verfahrens nach einem der Ansprüche 1 bis 4 mit Einrichtungen zum Zerkleinern, Sieben und Sichten der Abfälle, einer Einrichtung zum Vorkalzinieren des Rohmehls und einem Drehrohrofen, dadurch gekennzeichnet, daß der Austritt für die Flugfraktion (6) mit der Stirnwand des Drehrohrofens (1) und der Austritt für die brennbare Restfraktion (9) mit der Einrichtung zur Vorkalzinierung (3) verbunden ist.

7. Anlage nach Anspruch 6, dadurch gekennzeichnet, daß der Kühler (2) des Drehrohrofens mit dem Trockner (8) für die Flugfraktion und dieser mit der Einrichtung zur Vorkalzinierung (3) verbunden ist.